# EUROPEAN PATENT SPECIFICATION

(11) **EP 1 497 158 B1**
(45) Date of publication and mention of the grant of the patent: **22.03.2006**
(21) Application number: 03723547.0
(22) Date of filing: 09.04.2003
(51) Int. Cl.: B60R 11/00

(54) **SUPPORT PLATE FOR FITTING ON A VEHICLE PART**
STÜTZPLATTE ZUR MONTAGE AN EINEM FAHRZEUGTEIL
PLAQUE SUPPORT SE FIXANT SUR UNE PIECE D'UN VEHICULE

(30) Priority: 12.04.2002 SE 0201104
(43) Date of publication of application: 19.01.2005
(73) Proprietor: Scania CV AB (publ), 151 87 Södertälje (SE)
(72) Inventor: KARLSSON, Olov, S-152 52 Södertälje (SE)
(74) Representative: Sjögren, Stina
(86) International application number: PCT/SE2003/000572
(87) International publication number: WO 2003/086818

(56) References cited:
- WO-A1-95/26891
- US-A- 5 961 083

## Description

### Technical field

The present invention relates to a device intended to be fitted to an instrument panel, preferably in a vehicle, in order to achieve efficient use of space in the vicinity of the driver.

### Background

In modem vehicles there is a need to arrange a multiplicity of different functions so that they can easily be controlled by the driver of the vehicle. The functions are controlled by means of various types of switches fitted in the instrument panel or in other housings and panels within the vicinity of the driver. The endeavour to have the same positioning for each function in every vehicle and the fact that these functions may be selected as options result in vacant openings in cases where certain functions are not used. Such openings are then closed by blanking covers usually designed to conform to the shape and surface structure of the instrument panel. In addition to the functions with which the vehicle is provided during manufacture, there is often a need to add further equipment such as, for example, mobile telephone holder, notepad etc.

For the instrument panel to be ergonomic and aesthetically pleasing, it is usually concave towards the eyes and hands of the driver, which may make it difficult to find a suitable planar surface for fitting desired extra equipment within the driver's reach.

WO 95/26891 refers to a support plate according to the preamble of claim 1, in particular to a console for a mobile telephone holder intended to be fitted, for example, in an unused aperture for a switch. Owing to its design, that device occupies a relatively large area of the instrument panel and will thereby inevitably conceal other important functions of the instrument panel such as, for example, air delivery, thereby naturally causing disruption of functionality by affecting the air flows of the air conditioning system. That known design also entails risk of lack of stability in that the supporting surface for the mobile telephone holder is not arranged immediately adjacent to the fastening point for the console.

The device according to the present invention aims at providing in an efficient manner with regard to space a planar and stable surface in the vicinity of the driver which is intended to provide support for flexible fitting of various types of extra equipment whereby the planar surface will be perceived as an integral part of the instrument panel.

### Summary of the invention

The present invention is directed at solving at least part of the problem associated with the state of the art.

More precisely, the invention relates to a support plate for fitting to a vehicle part, which vehicle part exhibits at least two switch apertures each intended to be capable of accommodating a switch. The support plate is provided with an essentially planar front surface arranged to provide support for at least one object and/or holder device for an object. In addition, at least two fastening means are each arranged to be inserted and retained in its respective unused switch aperture so that the support plate, when in use, covers at least these two apertures.

The vehicle part preferably takes the form of an instrument panel but may also take the form of an A-pillar or some other housing or panel in the vehicle.

According to a preferred embodiment of the invention, an edge portion of the support plate exhibits at least one open recess for laying of wiring. This is particularly advantageous in cases where the support plate is to be used for fitting a mobile telephone holder with charging function whereby the holder has to be connected to an electrical connection behind, for example, the instrument panel. The support plate according to the invention thus provides a lead-in to functions situated behind the instrument panel, while at the same time the instrument panel is perceived as being "sealed", something which is usually desirable.

The support plate according to the invention may be provided with, for example, screw holes or the like for fitting a mobile telephone holder by screwing in, or with a pad of double-adhering material to which a mobile telephone holder of any desired kind or some other object may be fastened. A mobile telephone holder may also be bonded permanently to the support plate.

To provide a heightening of the substantially planar front surface relative to the vehicle part, e.g. the instrument panel, when the support plate is in its fitted position, an edge portion directed rearwards is arranged round the front surface. The edge portion of the support plate is provided with a protruding collar arranged to form a connection between the support plate and the vehicle part. The collar exhibits a support surface arranged to abut against the vehicle part and thereby contribute to the stability of the support plate in its fitted position. The collar thus provides support relative to the vehicle part, e.g. the instrument panel, along the whole periphery of the front surface.

According to a preferred embodiment of the invention, the support plate exhibits a substantially rectangular shape, but it is within the scope of the invention that the support plate may be of any desired shape, e.g. circular or irregular in shape.

According to a preferred embodiment of the invention, the fastening means take the form of snap-in means in the form of resilient flanges arranged parallel with two opposite sides of the support plate. The snap-in devices are arranged to cooperate with a free end of a well wall in the respective switch aperture used for fitting the support plate.

To provide stiffening of the support plate, stiffening flanges directed rearwards from the support plate may with advantage be arranged substantially perpendicular to the resilient flanges which constitute fastening means. As two switch apertures are used for fitting the support plate, each of the stiffening flanges exhibits at least one open recess arranged to accommodate an intermediate wall between two mutually adjacent switch apertures.

The size of the support plate may be selected according to the desired function and may thus cover two or more unused switch apertures, preferably in a lateral direction.

A particularly appropriate function for the support plate according to the invention is to provide support for a mobile telephone holder, but the invention is not limited to that application and may be used for a number of different applications, e.g. for fitting notepads, minicomputers, decals, badges etc.

### Brief description of the drawings

Embodiments of the invention are described below with reference to the attached drawings, in which:
Figure 1 depicts a support plate according to the invention, fitted in a switch panel;
Figure 2 depicts a perspective view of a support plate according to the invention as seen from in front;
Figure 3 depicts a perspective view of a support plate according to the invention as seen from behind;
Figure 4 depicts a section through the support plate at A-A in Figure 3;
Figure 5 depicts switch apertures with a support plate fitted, as seen from inside the instrument panel.

### Description of embodiments

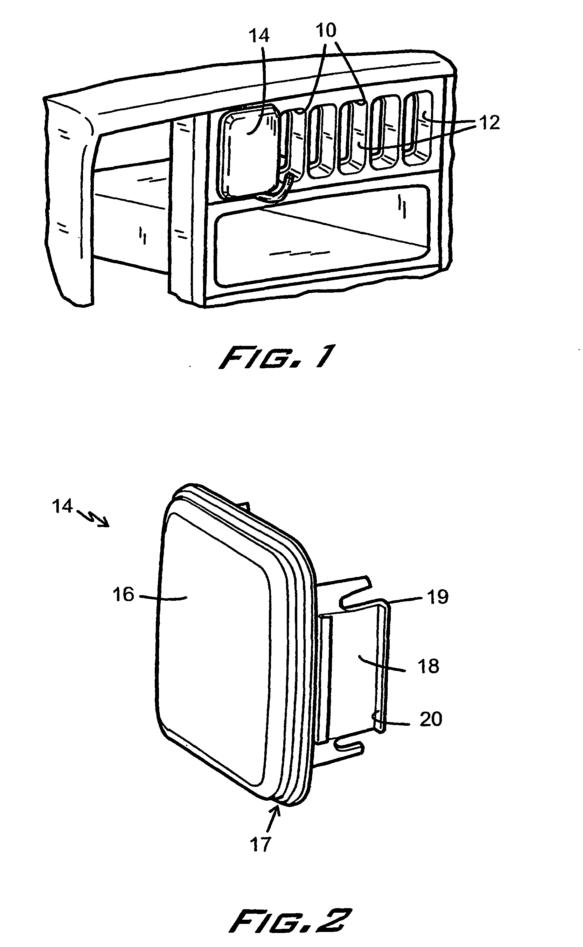

An instrument panel in a vehicle often incorporates a multiplicity of standardised modules intended to accommodate various accessories such as radio, journey computer, storage compartment etc. Such modules may also take the form of switch panels comprising a multiplicity of mutually adjacent apertures 10 for switches as depicted in Figure 1. Each switch aperture 10 takes the form of a "well" with standardised dimensions, defined by walls 12 which extend rearwards from, and substantially at right angles to, the front of the switch panel. The modules are shaped so that they conform to the curvature of the instrument panel surface. Switches fitted in apertures in a concave switch panel would be mutually parallel but at different levels from one another.

Figure 1 also depicts a support plate 14 according to the invention, fitted in a switch panel which forms part of an instrument panel.

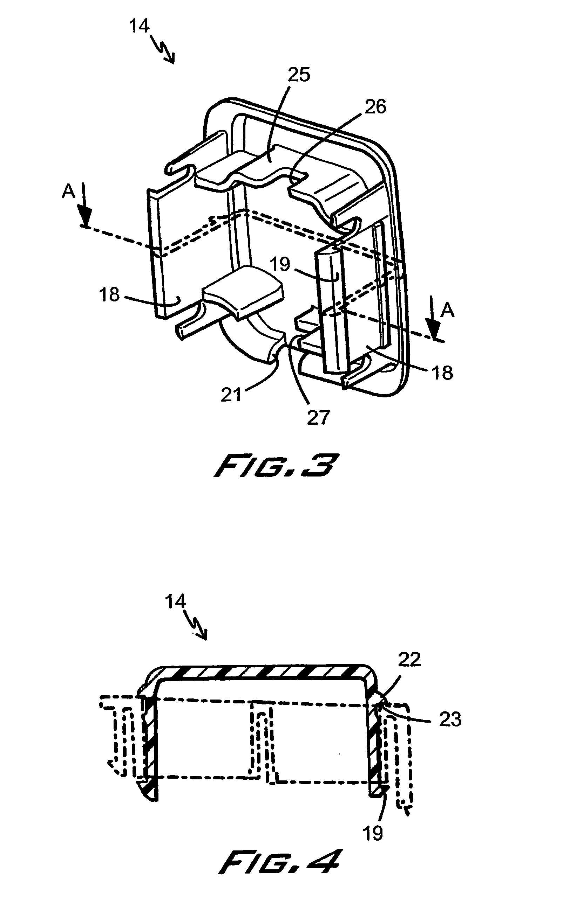

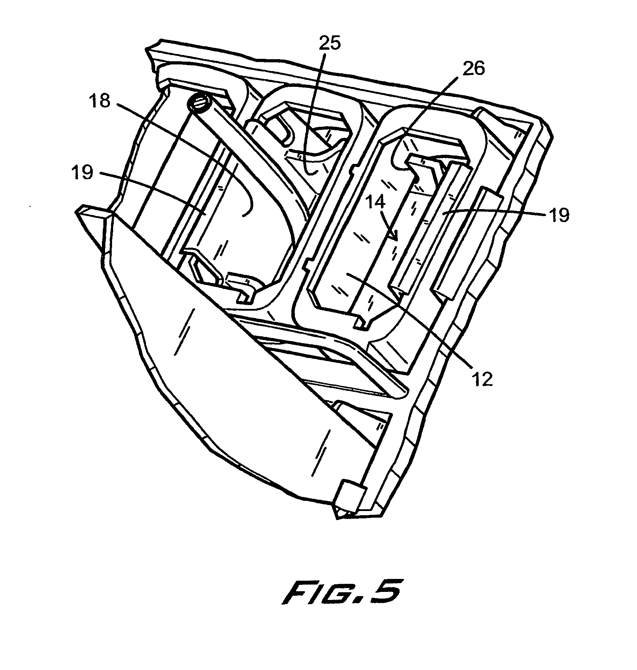

Figure 2 depicts a substantially rectangular support plate 14 according to the invention whereby the front of the support plate exhibits a planar front surface 16 intended to provide support for fitting, for example, a mobile telephone holder. The plate as depicted in Figure 3 is provided along two opposite sides with fastening means directed rearwards in the form of resilient flanges 18 each arranged to be inserted in its respective unused switch aperture 10. The free end of each flange 18 is provided with a protruding heel 19 with a support surface 20 arranged to cooperate with the free end of the well wall 12 in a switch aperture 10 so that the support plate 14 is fitted and retained in the unused switch apertures by means of a snap-in function. This is depicted most clearly in Figures 4 and 5.

As it is desirable that the instrument panel in a vehicle be perceived as "sealed", the edge portion 17 of the support plate is provided with a protruding collar 22 arranged to form a connection between the support plate and the instrument panel. The collar 22 exhibits a support surface 23 arranged to abut against the front of the switch panel. So that the planar front surface 16 will be somewhat heightened relative to the instrument panel surface, the edge portion 17 is directed rearwards from the front surface and the collar 22 with its support surface 23 arranged at the free edge of the edge portion 17.

To provide stable fastening of the support plate, the distance between the support surfaces 20, 23 of the flange 18 and of the collar 22 has to correspond substantially to the well depth of the switch aperture 10.

The distance between the flanges 18 is adapted to correspond substantially to at least two widths of a standardised switch aperture 10. The apertures used for fitting the support plate may thus be two mutually adjacent switch apertures 10 or alternatively two switch apertures with one or more unused switch apertures between them, depending on the distance between the flanges 18.

According to a preferred embodiment of the invention, the support plate 14 provides support for fitting a holder for a mobile telephone. To allow simple and aesthetic laying of wiring from the holder to an electrical connection behind the instrument broad, the edge portion 17 of the support plate is provided with an open recess 21 through which cables may be run. The aperture is so positioned as not to be visible to the driver when the support plate is fitted. The support plate thus constitutes a lead-in to functions fitted behind the instrument panel while at the same time the instrument panel is perceived as "sealed".

The support plate may also be provided with, for example, a double-adhering pad arranged on the substantially planar front surface 16 for fitting a mobile telephone holder, or alternatively screw holes for fitting a mobile telephone holder by threaded connection.

To stiffen the support plate 14, the resilient flanges 18 may be integrated with stiffening flanges 25 which are directed rearwards from the support plate and are arranged substantially perpendicular to the resilient flanges. The stiffening flanges 25 are provided with open recesses 26, 27 arranged to allow laying of wiring and to accommodate the intermediate wall between two mutually adjacent switch apertures when the plate is fitted.

The support plate 14 may be optimised to fit a certain preferred position on a curved instrument panel, or alternatively be adapted to flexible positioning. According to a special embodiment of the invention depicted in Figure 4, the planar front surface 16 has, after fitting the support plate, an orientation which is not at right angles to a perpendicular to the notional surface of the instrument panel under a centre point of the support plate 14. In this case the support plate 14 is so designed that the distance between the planar front surface 16 and the collar 22 is not constant round the whole support plate but is adapted to provide a desired orientation of the planar front surface relative to the instrument panel surface while at the same time achieving full contact between the support surface 23 of the collar and the front surface of the instrument panel.

The support plate according to the invention need not be fitted in a conventional switch panel on an instrument panel but may be fitted in switch apertures arranged anywhere desired in the vehicle, e.g. on a storage box, an A-pillar or on other housings or panels.

The support plate may for example be made of engineering plastic such as PC/ABS or aluminium. To render the plate aesthetically pleasing, the portions which are visible after fitting may be surface-treated with, for example, a wooden or metal layer. Depending on the desired use of the support plate, the substantially planar surface may be provided with appropriate surface structure and layout as desired.

The invention is not to be regarded as limited to the embodiment described above. Specialists will find a multiplicity of possible embodiments of the invention within the scope of the invention as defined in the claims set out below.

## Claims

1. A support plate (14) for fitting to a vehicle part, which vehicle part exhibits at least two switch apertures each intended to be able to accommodate a switch, the support plate comprising a substantially planar front surface (16) arranged to provide support for at least one object and/or holder device for an object, **characterised by** at least two fastening means (18) each arranged to be inserted and retained in its respective unused switch aperture, whereby the support plate (14) when in use covers at least these two apertures.

2. A support plate according to claim 1, **characterised in that** an edge portion (17) of the support plate exhibits at least one open recess (21) for laying of wiring.

3. A support plate according to claim 1 or 2, **characterised in that** a rearward-directed edge portion (17) with a protruding collar (22) surrounds the substantially planar front surface (16), and said collar (22) is arranged to form a connection between the vehicle part and the front surface (16) of the support plate, and the substantially planar front surface is given a heightened position relative to the surface of the vehicle part.

4. A support plate according to any one of the foregoing claims, **characterised by** being substantially rectangular in shape.

5. A support plate according to claim 4, **characterised in that** the fastening means (18) take the form of snap-in means in the form of resilient flanges arranged parallel with two opposite edges of the support plate (14).

6. A support plate according to claim 5, **characterised in that** stiffening flanges (25) directed rearwards from the support plate are arranged substantially perpendicular to the resilient flanges.

7. A support plate according to claim 6, **characterised in that** the stiffening flanges (25) exhibit at least one open recess arranged to accommodate an intermediate wall between two mutually adjacent switch apertures.

8. Use of a support plate according to any one of claims 1-6 to provide support for a mobile telephone holder.

## Patentansprüche

1. Stützplatte (14) zum Anbringen an einem Fahrzeugteil, welches Fahrzeugteil wenigstens zwei Schalteröffnungen aufweist, von denen jede dafür vorgesehen ist, einen Schalter aufnehmen zu können, wobei die Stützplatte eine im Wesentlichen ebene vorderseitige Oberfläche (16) zur Unterstützung für wenigstens ein Objekt und/oder eine Haltevorrichtung für ein Objekt umfasst,
**gekennzeichnet durch** wenigstens zwei Befestigungsmittel (18), von denen jedes dazu ausgeführt ist, in seiner zugehörigen ungenutzten Schalteröffnung eingesetzt und festgehalten zu werden, wobei die Stützplatte (14) in Gebrauch zumindest diese zwei Öffnungen abdeckt.

2. Stützplatte nach Anspruch 1,
**dadurch gekennzeichnet, dass** ein Randabschnitt (17) der Stützplatte mindestens eine offene Aussparung (21) zum Verlegen einer Verkabelung aufweist.

3. Stützplatte nach Anspruch 1 oder 2,
**dadurch gekennzeichnet, dass** ein rückwärtig gerichteter Randabschnitt (17) mit einem vorstehenden Bund (22) die im Wesentlichen ebene vorderseitige Oberfläche (16) umrandet, und dass der Bund (22) ausgeführt wurde um eine Verbindung zwischen dem Fahrzeugteil und der vorderseitigen Oberfläche (16) der Stützplatte herzustellen, und dass die im Wesentlichen ebene vorderseitige Oberfläche eine in Relation zu der Oberfläche des Fahrzeugteils erhöhte Position erhält.

4. Stützplatte nach einem der vorangehenden Ansprüche,
**gekennzeichnet durch** eine im Wesentlichen rechteckige Form.

5. Stützplatte nach Anspruch 4,
**dadurch gekennzeichnet, dass** die Befestigungsmittel (18) die Gestalt von Einrastmitteln in Form federnder Flansche aufweisen, die parallel zu zwei gegenüberliegenden Rändern der Stützplatte (14) angeordnet sind.

6. Stützplatte nach Anspruch 5,
**dadurch gekennzeichnet, dass** von der Stützplatte rückwärtig ausgerichtete Versteifungsflansche (25) im Wesentlichen senkrecht zu den federnden Flanschen angeordnet sind.

7. Stützplatte nach Anspruch 6,
**dadurch gekennzeichnet, dass** die Versteifungsflansche (25) mindestens eine offene Aussparung zur Aufnahme einer Zwischenwand zwischen den benachbarten Schalteröffnungen aufweisen.

8. Verwendung einer Stützplatte nach einem der Ansprüche 1 bis 6 als Unterstützung für eine Mobiltelefonhalterung.

## Revendications

1. Plaque de support (14) pour l'adaptation sur une partie d'un véhicule, laquelle partie du véhicule présente au moins deux ouvertures de commutateur destinées chacune à être capable de recevoir un commutateur, la plaque de support comprenant une surface avant (16) sensiblement plane, agencée pour fournir un support pour au moins un objet et/ou un dispositif de support pour un objet, **caractérisée par** au moins deux moyens de fixation (18) agencés chacun pour être insérés et retenus dans son ouverture de commutateur non utilisée respective de sorte que la plaque de support (14) lorsqu'elle est en service couvre au moins ces deux ouvertures.

2. Plaque de support selon la revendication 1, **caractérisée en ce qu'**une partie de bord (17) de la plaque de support présente au moins un évidement ouvert (21) pour déposer un fil.

3. Plaque de support selon la revendication 1 ou 2, **caractérisée en ce qu'**une partie de bord (17) dirigée vers l'arrière avec un collier faisant saillie (22) entoure la surface avant (16) sensiblement plane et ledit collier (22) est agencé pour former une liaison entre la partie de véhicule et la surface avant (16) de la plaque de support et la surface avant sensiblement plane reçoit une position agrandie par rapport à la surface de la partie de véhicule.

4. Plaque de support selon l'une quelconque des revendications précédentes, **caractérisée en ce qu'**elle est sensiblement de forme rectangulaire.

5. Plaque de support selon la revendication 4, **caractérisée en ce que** les moyens de fixation (18) affectent la forme de moyens à adaptation ayant des rebords élastiques agencés parallèlement avec deux bords opposés de la plaque de support (14).

6. Plaque de support selon la revendication 5, **caractérisée en ce que** des rebords de raidissement (25) dirigés vers l'arrière à partir de la plaque de support sont agencés essentiellement perpendiculairement aux rebords élastiques.

7. Plaque de support selon la revendication 6, **caractérisée en ce que** les rebords de raidissement (25) présentent au moins un évidement ouvert agencé pour recevoir une paroi intermédiaire entre deux ouvertures de commutateur mutuellement contiguës.

8. Utilisation d'une plaque de support selon l'une quelconque des revendications 1 à 6 pour fournir un support pour un support de téléphone portable.
